# EUROPÄISCHE PATENTANMELDUNG

(11) **EP 2 921 673 A1**
(43) Veröffentlichungstag der Anmeldung: **23.09.2015**
(21) Anmeldenummer: 14160875.2
(22) Anmeldetag: 20.03.2014
(51) Int. Cl.: F02C 9/16, F02C 9/28

(54) **Variable Grenzleistungsregelung für Gasturbinen**

(71) Anmelder: Siemens Aktiengesellschaft, 80333 München (DE)
(72) Erfinder: Beiler, Jan-Dirk, 45473 Mülheim a.d. Ruhr (DE); Gamm, Hans-Georg, 46535 Dinslaken (DE); Kerstiens, Thomas, 48149 Münster (DE); Link, Marco, 46049 Oberhausen (DE); Mühlhölzer, Rosa-Eos, 67158 Ellerstadt (DE); Purps, Florian, 68259 Mannheim (DE); Schneider, Oliver, 46487 Wesel (DE); Schäfer, Marc, 45470 Mülheim an der Ruhr (DE)

(57) **Zusammenfassung**

Die Erfindung führt ein Verfahren zum Betreiben einer Gasturbinenanlage (1) mit einer Gasturbine (100) und einem von der Gasturbine (100) angetriebenen elektrischen Generator (200) ein. Das Verfahren weist wenigstens die folgenden Schritte auf:
- Erfassen einer Momentanleistung der Gasturbinenanlage (1) ;
- Vergleichen der erfassten Momentanleistung mit einem Leistungsgrenzwert; und
- Begrenzen der Momentanleistung, wenn das Vergleichen ergibt, dass die erfasste Momentanleistung den Leistungsgrenzwert erreicht oder überschreitet. Erfindungsgemäß sind dabei ein Schritt des Erfassens wenigstens eines Betriebsparameters der Gasturbinenanlage (1) und ein Schritt des Bestimmens des Leistungsgrenzwertes in Abhängigkeit des wenigstens einen erfassten Betriebsparameters vorgesehen.

## Beschreibung

Die Erfindung betrifft ein Verfahren zum Betreiben einer Gasturbinenanlage und eine nach dem Verfahren betriebene Gasturbinenanlage.

Die Grenzleistung einer Gasturbine ist die Leistung, bei der eine Gasturbine maximal betrieben werden darf, und wird durch die mechanische Integrität der einzelnen Bauteile der Gasturbine bestimmt. Das Bauteil, das zuerst die Grenze seiner mechanischen Belastbarkeit erreicht, ist dabei bestimmend für die Grenzleistung der Gasturbine. Typischerweise handelt es sich bei diesen Bauteilen um die in der Hauptströmungsrichtung hinteren Turbinenschaufeln, die aufgrund ihres Radius und der damit einhergehenden größeren auf die Turbinenschaufeln wirkenden Zentrifugalkräfte am stärksten belastet werden.

Um eine möglichst hohe Energieausbeute der Gasturbine zu erreichen, wird diese möglichst nahe an der Grenzleistung betrieben. Die momentane Leistung der Gasturbine wird üblicherweise an den elektrischen Ausgängen eines von der Gasturbine angetriebenen elektrischen Generators der Gasturbinenanlage durch Messen der Ströme, Spannungen und gegebenenfalls Phasenwinkel indirekt bestimmt, da angenommen wird, dass die momentane Ausgangsleistung des elektrischen Generators direkt von der momentanen Leistung abhängt.

Die momentane Leistung der Gasturbine kann aufgrund von Schwankungen von Betriebsparametern kurzfristig die für die Gasturbine festgelegte Grenzleistung erreichen oder überschreiten. In diesem Fall wird die Gasturbine gedrosselt, um ihre mechanische Integrität zu gewährleisten.

Die Erfindung macht es sich zur Aufgabe, ein verbessertes Verfahren für den Betrieb einer Gasturbinenanlage bereitzustellen.

Die Erfindung führt daher ein Verfahren zum Betreiben einer Gasturbinenanlage mit einer Gasturbine und einem von der Gasturbine angetriebenen elektrischen Generator ein. Das Verfahren weist wenigstens die folgenden Schritte auf:
- Erfassen einer Momentanleistung der Gasturbinenanlage;
- Vergleichen der erfassten Momentanleistung mit einem Leistungsgrenzwert; und
- Begrenzen der Momentanleistung, wenn das Vergleichen ergibt, dass die erfasste Momentanleistung den Leistungsgrenzwert erreicht oder überschreitet. Erfindungsgemäß sind dabei ein Schritt des Erfassens wenigstens eines Betriebsparameters der Gasturbinenanlage und ein Schritt des Bestimmens des Leistungsgrenzwertes in Abhängigkeit des wenigstens einen erfassten Betriebsparameters vorgesehen.

Die Erfindung besitzt den Vorteil, dass eine höhere Energieausbeute erreicht wird, indem eine variable Grenzleistung für die Regelung der Gasturbinenanlage verwendet wird. Die Erfindung beruht dabei auf der Einsicht und schließt diese mit ein, dass die Begrenzung durch die am Generator gemessene elektrische Ausgangsleistung nicht für jeden Betriebszustand der Gasturbinenanlage direkt auf eine kritische momentane Belastung der Gasturbine, die durch die strömungstechnischen und rotationsmechanischen Gegebenheiten in der Gasturbine bestimmt wird, schließen lässt. So können Veränderungen der Betriebsparameter der Gasturbine eine höhere momentane Leistung der Gasturbine zulassen, die unter anderen Betriebsbedingungen eine unzulässig hohe Belastung darstellen würden. Ein fester Leistungsgrenzwert, der für alle Betriebszustände der Gasturbine gleichermaßen Anwendung findet, muss so konservativ gewählt sein, dass er für alle Betriebszustände die mechanische Integrität der Gasturbine sicherstellt. Die erfindungsgemäße Verwendung eines variablen Leistungsgrenzwertes, der in Abhängigkeit der zu einem gegebenen Zeitpunkt tatsächlich vorliegenden Betriebsparameter bestimmt wird, erlaubt jedoch in bestimmten Situationen, die momentane Leistung der Gasturbinenanlage über einen solchen konservativ gewählten Leistungsgrenzwert hinauszugehen, wodurch die Gesamtenergieausbeute und damit die Wirtschaftlichkeit der Gasturbinenanlage steigt.

Bevorzugt umfasst der wenigstens eine Betriebsparameter der Gasturbinenanlage wenigstens einen ausgewählten Betriebsparameter von einer Umgebungstemperatur, einem Umgebungsdruck, einer Gesamtlaufzeit der Gasturbine oder einer Gesamtenergieausgabe der Gasturbinenanlage. Bei diesen Betriebsparametern handelt es sich um solche, die unmittelbar die momentane Leistung der Gasturbine beeinflussen (Umgebungstemperatur und Umgebungsdruck) und eine Wirkung auf die mechanische Belastungsgrenze der Gasturbine haben (Gesamtlaufzeit und Gesamtenergieausgabe). Diese Betriebsparameter können gegebenenfalls durch Sensoren wie Thermoelemente oder Druckaufnehmer bestimmt werden.

Besonders bevorzugt wird der Leistungsgrenzwert erhöht, wenn sich die Umgebungstemperatur verringert. Umgekehrt kann der Leistungsgrenzwert verringert werden, wenn die Umgebungstemperatur steigt. Mit sinkenden Umgebungstemperaturen oder steigendem Umgebungsdruck erhöht sich die gemessene Leistung am Generator in stärkerem Maße als die spezifische Belastung der Turbine. Dementsprechend kann eine Erhöhung der momentanen Leistung der Gasturbine aufgrund einer sinkenden Umgebungstemperatur mit reduziertem Regeleingriff zugelassen werden.

Ebenso kann der Leistungsgrenzwert erhöht werden, wenn sich der Umgebungsdruck erhöht, beziehungsweise der Leistungsgrenzwert reduziert werden, wenn der Umgebungsdruck sinkt. Die Änderungen des Umgebungsdrucks wirken sich wie die der Umgebungstemperatur auf den Massenstrom des Verdichters aus. Es ist dabei auch möglich, den Massenstrom des Verdichters anhand von Messungen und/oder Berechnungen, gegebenenfalls in Abhängigkeit der Umgebungstemperatur und des Umgebungsdrucks, als Betriebsparameter der Gasturbine zu bestimmen und den Grenzleistungswert in Abhängigkeit von diesem Massenstrom zu wählen. Hierfür können gegebenenfalls weitere Betriebsparameter wie beispielsweise der Verdichteraustrittsdruck oder die Verdichteraustrittstemperatur berücksichtigt werden.

Der Leistungsgrenzwert wird verringert, wenn die Gesamtlaufzeit der Gasturbine einen vorherbestimmten Schwellwert überschreitet. Diese Ausführungsform der Erfindung trägt der Tatsache Rechnung, dass sich die Belastung relativ zu der gemessenen Leistung am Generator mit zunehmender Alterung erhöht. Dementsprechend können bei ansonsten baugleichen Gasturbinen mit unterschiedlichen summierten Laufzeiten für diejenige mit den geringeren Laufleistungen höhere Leistungsgrenzwerte gewählt werden als für die andere. Hierbei ändert sich weniger die Belastbarkeit der Bauteile als viel mehr die Leistungsausbeute bei gleicher mechanischer Belastung. Die Alterung kann entweder in Form einer flottenspezifischen Charakteristik vorgegeben werden oder in Form einer Berechnung aus Betriebsparametern. Dies erlaubt es, geeignete Leistungsgrenzwerte auch nach einer Reparatur oder Überarbeitung der Gasturbine zu wählen, bei denen einzelne Bauteile der Gasturbine ausgetauscht oder repariert wurden.

Die Momentanleistung der Gasturbinenanlage kann bestimmt werden, indem eine elektrische Ausgabeleistung des elektrischen Generators der Gasturbinenanlage bestimmt wird. Alternativ ist es aber auch möglich, die Momentanleistung der Gasturbinenanlage zu bestimmen, indem eine momentane Turbinenleistung der Gasturbine der Gasturbinenanlage bestimmt wird. Die Bestimmung der elektrischen Ausgabeleistung des Generators der Gasturbinenanlage ist einfach durchzuführen und bei vielen bestehenden Gasturbinenanlagen ohne bauliche Veränderung möglich. Die Verwendung der momentanen Turbinenleistung besitzt hingegen den Vorteil, dass die tatsächlich auf die einzelnen Bauteile der Gasturbine wirkenden Kräfte und Belastungen direkt abgeleitet werden können, so dass geeignete Leistungsgrenzwerte unmittelbar folgen. Die Regelung kann somit direkt auf einer neuen Regelgröße aufsetzen, nämlich der momentanen Turbinenleistung der Gasturbine, die durch eine mathematische Modellierung auf der Grundlage der messtechnisch bestimmten und/oder im System bekannten Betriebsbedingungen bestimmt werden. Dabei kann die momentane Turbinenleistung auch unter Betrachtung der jeweiligen Leistungen der verschiedenen Turbinenstufen erfolgen, die auch für sich als Regelgröße in die Regelung eingehen können.

Die Momentanleistung kann beispielsweise begrenzt werden, indem ein Verdichtermassenstrom eines Verdichters der Gasturbine begrenzt wird. Dies kann durch unterschiedliche Maßnahmen wie beispielsweise ein Verstellen einer Reihe variabler Leitschaufeln des Verdichters oder bei Verwendung eines Wet-Compression-Verfahrens durch eine Verringerung der in den Verdichter eingespritzten Wassermenge erreicht werden.

Ein zweiter Erfindungsaspekt betrifft eine Gasturbinenanlage mit einer Gasturbine, einem mit der Gasturbine verbundenen elektrischen Generator und einer mit der Gasturbine und dem elektrischen Generator verbundenen Steuereinheit, die ausgebildet ist, das erfindungsgemäße Verfahren auszuführen.

Außerdem betrifft die Erfindung einen computerlesbaren Datenträger mit einem computerausführbaren Programmcode, der, von einer Steuereinheit einer solchen Gasturbinenanlage ausgeführt, das erfindungsgemäße Verfahren ausführt. Bestehende Installationen von Gasturbinenanlagen können durch eine Aktualisierung ihrer Steuerungssoftware so modifiziert werden, dass sie Verwendung von der Erfindung machen.

Die Erfindung wird nachfolgend anhand von Abbildungen von Ausführungsbeispielen näher erläutert. Es zeigen:
- Figur 1: eine erfindungsgemäße Gasturbinenanlage;
- Figur 2: ein Beispiel einer Gasturbine in einem Längsteilschnitt;
- Figur 3: ein erstes Diagramm, das die Leistung einer Gasturbine als Funktion der Temperatur erläutert; und
- Figur 4: ein zweites Diagramm, das die Leistung einer Gasturbine als Funktion der Temperatur bei Verwendung des erfindungsgemäßen Verfahrens erläutert.

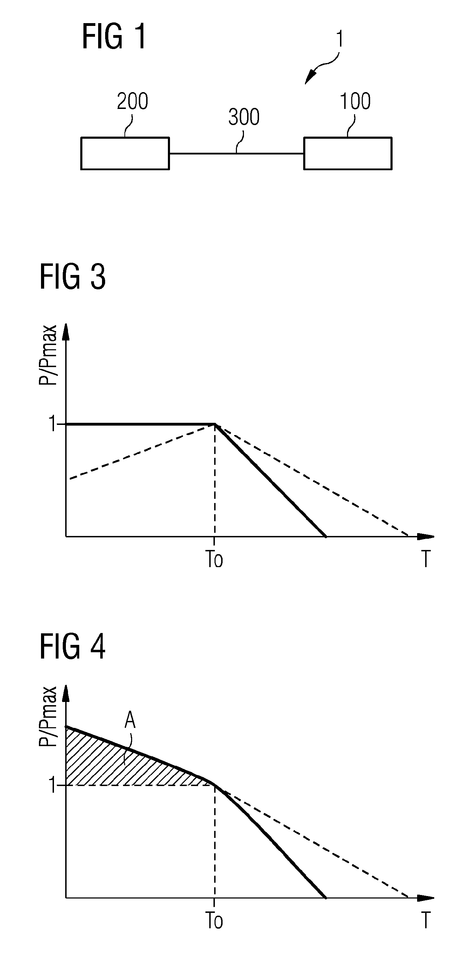

Figur 1 zeigt eine erfindungsgemäße Gasturbinenanlage 1, die eine Gasturbine 100 umfasst, die über eine Welle 300 mit einem elektrischen Generator 200 verbunden ist und diesen antreibt. Der elektrische Generator 200 wandelt die von der Gasturbine 100 bereitgestellte Rotationsenergie in elektrische Energie um und gibt diese über elektrische Anschlüsse aus.

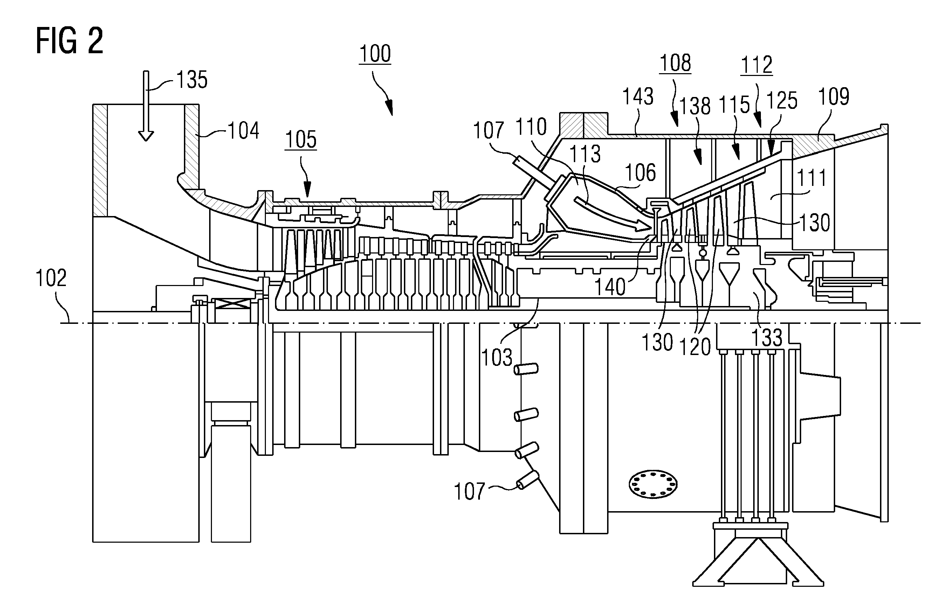

Die Figur 2 zeigt ein Ausführungsbeispiel einer Gasturbine, wie sie in einer erfindungsgemäßen Gasturbinenanlage Verwendung finden kann, in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Von der Brennkammer 110 entspannt das heiße Gas in einem ringförmigen Heißgaskanal 111 der Turbine. Dort bilden beispielsweise vier hintereinander geschaltete Turbinenstufen 112 die Turbine 108.

Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125. Die Laufschaufeln 120 stellen üblicherweise diejenigen Bauteile mit der größten Belastung dar, wobei die Belastung der Laufschaufeln 120 in Strömungsrichtung des Arbeitsmediums 113 aufgrund der ansteigenden Radien der Vorrichtung zunimmt. Diese Bauteile bestimmen daher maßgeblich den Leistungsgrenzwert.

Die Leitschaufeln 130 sind an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein elektrischer Generator (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Figur 3 zeigt ein erstes Diagramm, das die Leistung einer Gasturbine als Funktion der Temperatur erläutert. Dabei sind die elektrische Ausgabeleistung der Gasturbinenanlage als durchgezogene Linie und die Turbinenleistung der Gasturbine als gestrichelte Linie über der Umgebungstemperatur T aufgetragen, wobei die beiden genannten Leistungen auf ihren jeweiligen Grenzleistungswert normiert sind.

Die Gasturbinenanlage wird im Beispiel der Figur 3 gemäß der herkömmlichen Verfahrensweise betrieben. Es zeigt sich, dass für hohe Temperaturen aufgrund der herabgesetzten Dichte der Umgebungsluft und des dadurch reduzierten Massenstromes des Verdichters der Gasturbine die elektrische Ausgabeleistung der Gasturbinenanlage unter der gesetzten Grenze bleibt und mit zunehmender Umgebungstemperatur weiter abnimmt. Die Turbinenleistung der Gasturbine, die die tatsächliche Belastung des Turbinenabschnitts der Gasturbine bestimmt, zeigt ein entsprechendes Verhalten. Mit sinkenden Umgebungstemperaturen wird die vom Verdichter angesaugte Luft dichter, so dass der Gasturbine vom Verdichter ein größerer Massenstrom zur Verfügung gestellt werden kann, der eine entsprechend steigende Turbinenleistung und auch elektrische Ausgabeleistung bedingt. Erreicht die elektrische Ausgabeleistung einen vorherbestimmten Maximalwert, was im gezeigten Beispiel bei einer Umgebungstemperatur T₀ geschieht, wird sie begrenzt und möglichst nah an dem Maximalwert gehalten, was durch Steuereingriffe am Verdichter geschehen kann. Bei der Umgebungstemperatur T₀ erreicht auch die Turbinenleistung der Gasturbine ihren maximal zulässigen Wert. Sinkt die Umgebungstemperatur weiter, wird die elektrische Ausgabeleistung konstant gehalten, allerdings kann die Gasturbine diese elektrische Ausgabeleistung bei einer immer geringeren Turbinenleistung der Gasturbine erreichen. Dies erklärt sich dadurch, dass die von dem Turbinenabschnitt aus dem heißen Gasstrom des verbrennenden Brennstoffs entnommene Rotationsenergie wieder teilweise an den Verdichter abgibt, der die Verbrennungsluft verdichtet. Da wegen der sinkenden Temperaturen und einem sinkenden Verdichtermassenstrom weniger Verdichterarbeit aufgewendet werden muss, kann ein entsprechend größerer Teil der Rotationsenergie im elektrischen Generator in elektrische Energie umgewandelt werden. Indem aber die elektrische Ausgabeleistung des Generators nun konstant gehalten wird, kann die Gasturbine bei sinkenden Umgebungstemperaturen diese elektrische Ausgabeleistung mit einer sinkenden Turbinenleistung bereitstellen. Dementsprechend fällt auch die Belastung der Gasturbine mit niedrigen Temperaturen unter das maximal zulässige Maß.

Figur 4 zeigt ein zweites Diagramm, das die Leistung einer Gasturbine als Funktion der Temperatur bei Verwendung des erfindungsgemäßen Verfahrens erläutert. Hierbei sind wiederum die elektrische Ausgabeleistung der Gasturbinenanlage als durchgezogene Linie und die Turbinenleistung der Gasturbine als gestrichelte Linie über der Umgebungstemperatur T aufgetragen. Das Verhalten oberhalb der Umgebungstemperatur T₀ entspricht dem der Figur 3, so dass eine Wiederholung der obigen Erläuterungen unterbleiben kann. Unterhalb der Umgebungstemperatur T₀ wird die Gasturbine nun jedoch so geregelt, dass der Leistungsgrenzwert in Abhängigkeit von den herrschenden Betriebsbedingungen bestimmt wird. Ziel ist es hierbei, die Turbinenleistung als Regelgröße an ihrem maximal zulässigen Wert zu halten. Dies führt jedoch dazu, dass bei sinkenden Umgebungstemperaturen mit einer abnehmenden Verdichterleistung der gewünschte Massenstrom der Verdichterluft bereitgestellt werden kann, so dass ein entsprechend höherer Anteil der Turbinenleistung an den elektrischen Generator abgegeben werden kann. Folge hiervon ist eine entsprechende Erhöhung der elektrischen Ausgabeleistung der Gasturbinenanlage. Das wirtschaftliche Potential der Erfindung lässt sich an der schraffierten Fläche A in Figur 4 ablesen. Während sich die Figuren 3 und 4 auf die Umgebungstemperatur beziehen, können entsprechende Aussagen für den Luftdruck gemacht werden, wobei allerdings die Wirkung eines steigenden Luftdrucks mit jener einer abnehmenden Umgebungstemperatur und die eines sinkenden Luftdrucks mit jener einer zunehmenden Umgebungstemperatur zu vergleichen sind.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Ein Verfahren zum Betreiben einer Gasturbinenanlage (1) mit einer Gasturbine (100) und einem von der Gasturbine (100) angetriebenen elektrischen Generator (200), das Verfahren wenigstens die folgenden Schritte aufweisend:
- Erfassen einer Momentanleistung der Gasturbinenanlage (1);
- Vergleichen der erfassten Momentanleistung mit einem Leistungsgrenzwert; und
- Begrenzen der Momentanleistung, wenn das Vergleichen ergibt, dass die erfasste Momentanleistung den Leistungsgrenzwert erreicht oder überschreitet,
**gekennzeichnet durch** einen Schritt des Erfassens wenigstens eines Betriebsparameters der Gasturbinenanlage (1) und einen Schritt des Bestimmens des Leistungsgrenzwertes in Abhängigkeit des wenigstens einen erfassten Betriebsparameters.

2. Das Verfahren des vorhergehenden Anspruchs, bei dem der wenigstens eine Betriebsparameter der Gasturbinenanlage (1) wenigstens einen ausgewählten Betriebsparameter von einer Umgebungstemperatur, einem Umgebungsdruck, einer Gesamtlaufzeit der Gasturbine (100) oder einer Gesamtenergieausgabe der Gasturbinenanlage (1) umfasst.

3. Das Verfahren des vorhergehenden Anspruchs, bei dem der Leistungsgrenzwert erhöht wird, wenn sich die Umgebungstemperatur verringert.

4. Das Verfahren von einem der Ansprüche 2 oder 3, bei dem der Leistungsgrenzwert erhöht wird, wenn sich der Umgebungsdruck erhöht.

5. Das Verfahren von einem der Ansprüche 2 bis 4, bei dem der Leistungsgrenzwert verringert wird, wenn die Gesamtlaufzeit der Gasturbine (100) einen vorherbestimmten Schwellwert überschreitet.

6. Das Verfahren von einem der vorhergehenden Ansprüche, bei dem die Momentanleistung der Gasturbinenanlage (1) bestimmt wird, indem eine elektrische Ausgabeleistung des elektrischen Generators (200) der Gasturbinenanlage (1) bestimmt wird.

7. Das Verfahren von einem der Ansprüche 1 bis 5, bei dem die Momentanleistung der Gasturbinenanlage (1) bestimmt wird, indem eine momentane Turbinenleistung der Gasturbine (100) der Gasturbinenanlage (1) bestimmt wird.

8. Das Verfahren von einem der vorhergehenden Ansprüche, bei dem die Momentanleistung begrenzt wird, indem ein Verdichtermassenstrom eines Verdichters (105) der Gasturbine (100) begrenzt wird.

9. Eine Gasturbinenanlage (1) mit einer Gasturbine (100), einem mit der Gasturbine (100) verbundenen elektrischen Generator (200) und einer mit der Gasturbine (100) und dem elektrischen Generator (200) verbundenen Steuereinheit, die ausgebildet ist, das Verfahren eines der vorhergehenden Ansprüche auszuführen.

10. Ein computerlesbarer Datenträger mit einem computerausführbaren Programmcode, der, von einer Steuereinheit einer Gasturbinenanlage (1) gemäß dem vorhergehenden Anspruch ausgeführt, das Verfahren gemäß einem der Ansprüche 1 bis 8 ausführt.
